# EUROPÄISCHE PATENTSCHRIFT

(11) **EP 1 757 497 B1**
(45) Veröffentlichungstag und Bekanntmachung des Hinweises auf die Patenterteilung: **23.04.2008**
(21) Anmeldenummer: 06014982.0
(22) Anmeldetag: 19.07.2006
(51) Int. Cl.: B60R 21/34, B60R 21/13

(54) **Pyrotechnisch auslösbare Haltevorrichtung für Schutzvorrichtungen in Kraftfahrzeugen**
Pyrotechnically actuated restraining device in motor vehicles
Dispositif pyrotechnique de commande pour un moyen de retenue placé dans un véhicule automobile

(30) Priorität: 27.08.2005 DE 102005040706
(43) Veröffentlichungstag der Anmeldung: 28.02.2007
(73) Patentinhaber: ISE Innomotive Systems Europe GmbH, 51702 Bergneustadt (DE)
(72) Erfinder: Schulte, Michael, 57462 Olpe/Biggesee (DE)
(74) Vertreter: Fuchs

(56) Entgegenhaltungen:
- DE-A1- 10 247 801
- DE-A1- 10 343 106
- DE-U1- 20 013 256

## Beschreibung

Die Erfindung bezieht sich auf eine pyrotechnisch auslösbare Haltevorrichtung für Schutzvorrichtungen in Kraftfahrzeugen, die ein Aufstellglied aufweisen, das in einem fahrzeugfesten Gehäuse geführt aufgenommen ist, mit beweglichen Rastelementen einer Rastverbindung zum Niederhalten des Aufstellgliedes im Grundzustand und einem pyrotechnischen Gasgenerator zum Lösen der Rastverbindung im Schutzfall.

In Kraftfahrzeugen werden verstärkt Schutzvorrichtungen zum Personenschutz integriert, die zwei zueinander bewegbare Teile aufweisen, welche im Grundzustand, wenn keine Gefährdung zu erwarten ist, durch eine Haltevorrichtung in ihrer gegenseitigen Lage fixiert werden müssen, und die im Gefahrenfall unter Auslösen der Haltevorrichtung mit hoher Beschleunigung relativ zueinander bewegt werden müssen.

Typische Beispiele sind die bekannten Überrollschutzvorrichtungen für Cabriolets mit einem ausfahrbaren Überrollbügel, der im Grundzustand durch die Haltevorrichtung in einer abgesenkten Ruhelage in einem kassettenartigen Gehäuse fixiert ist, und der im Überschlagfall aus der abgesenkten Ruhelage in eine Stützlage ausfährt.

Ein weiteres typisches Beispiel sind die bekannten Vorrichtungen zum Schutz von Personen bei einem Frontalaufprall auf die Fronthaube des Kraftfahrzeuges durch aktives Aufstellen der Fronthaube, insbesondere im Bereich des Haubenscharnieres, durch ein Aufstellelement, das aus einem karosseriefesten Gehäuse und einem darin aufstellbar gehalterten, mit der Fronthaube verbundenen Hubelement besteht. Im Grundzustand wird das Hubelement durch die Haltevorrichtung in der abgesenkten Ruhelage gehalten; im Gefahrenfall wird es unter Auslösen der Haltevorrichtung um einen vorgegebenen Hub aufgestellt.

Bei den vorgenannten Schutz-Vorrichtungen ist die Haltevorrichtung ein wesentliches Sicherheitselement, das im Gefahrenfall sicher auslösbar sein muß.

Es ist eine Vielzahl von Konstruktionen für derartige auslösbare Haltevorrichtungen bekannt geworden. So zeigt die gattungsgemäße DE 103 44 445.9 A1 eine auslösbare Haltevorrichtung für ein Aufstellelement einer "aktiven Motorhaube", die über ein längsverschiebbares Auslöseglied verfügt, welches mit einem Sperrglied in Wirkverbindung steht. Das Sperrglied steht im Ruhezustand in Formschluß mit spreizbaren Rastelementen, die wiederum das Hubelement im Gehäuse unten halten. Nach dem Auslösen wird das Auslöseglied in Längsrichtung verschoben, der Formschluß zwischen Sperrglied und spreizbaren Rastelementen wird aufgehoben und das Hubelement kann ausfahren.

Ferner sind einschlägige auslösbare Haltevorrichtungen mit Kugelverrastungen (DE 102 49 272 A1) mit Rastbolzen (DE 103 15 827 B4) und mit Klinken bekannt.

Die Erfindung wendet sich dabei an Systeme mit Rastelementen als Halteelement.

Die Auslösung kann dabei durch einen sensorbetätigten Auslösemagneten oder durch einen pyrotechnischen Aktuator mit einem Gasgenerator erfolgen. Von letzterer Alternative geht auch die Erfindung aus. Nach Auslösen der Haltevorrichtung kann das auszufahrende Teil entweder durch eine vorgespannte Feder oder durch einen pyrotechnischen Gasgenerator aufgestellt werden, was im Fall der Erfindung bevorzugt wird.

Durch die Verwendung einer Vielzahl von Bauteilen, welche die auslösbare Haltevorrichtung bilden, kann es zu Fehlfunktionen kommen, die auf einer Addition der unterschiedlichen Toleranzen zurückzuführen sind. Ferner wird aufgrund des Kostendrucks in der Automobilzulieferindustrie der Ruf nach kostengünstigen Systemen lauter. Alle im Stand der Technik beschriebenen auslösbaren Haltevorrichtungen haben dabei gemeinsam, dass sie über zusätzliche Sperrelemente verfügen, es sich also um indirekte auslösende Haltevorrichtungen handelt.

Der Erfindung liegt die Aufgabe zugrunde, die eingangs bezeichnete pyrotechnisch auslösbare Haltevorrichtung so auszubilden, dass sie eine direkte Auslösung ermöglicht, ohne dass ein zusätzliches Sperrglied benötigt wird, welches über die Rastelemente das Hubsystem frei gibt. Das führt zum einem zu einem erheblichen Kostenvorteil und zum anderen wird die Wahrscheinlichkeit einer Fehlfunktion minimiert, da deutlich weniger Toleranzen aufeinander abgestimmt werden müssen.

Die Lösung dieser Aufgabe gelingt bei einer pyrotechnisch auslösbaren Haltevorrichtung für Schutzvorrichtungen in Kraftfahrzeugen, die ein Aufstellglied aufweisen, das in einem fahrzeugfesten Gehäuse geführt aufgenommen ist, mit beweglichen Rastelementen einer Rastverbindung zum Niederhalten des Aufstellgliedes im Grundzustand und einem pyrotechnischen Gasgenerator zum Lösen der Rastverbindung im Schutzfall gemäß der Erfindung dadurch, dass der Gasgenerator einen wegsprengbaren Außenmantel aufweist, der im direkten haltenden Formschluß mit den beweglichen Rastelementen der Rastverbindung steht.

Durch die erfindungsgemäßen Maßnahmen ist durch einfaches Aufheben des direkten Formschlusses eine direkte Auslösung ohne zusätzliche Sperrglieder möglich, mit erheblichen Kostenvorteilen und erhöhter Auslösesicherheit.

Die DE 103 56 310 A1 zeigt zwar ein Aufstellelement für eine "aktive Motorhaube", dessen mit dem Haubenschamier verbundenes Hubelement in dem Gehäuse im Ruhezustand durch eine Haltevorrichtung fixiert ist, mit einem pyrotechnischen Treibsatz, der nach seiner sensorgesteuerten Auslösung zunächst die Haltevorrichtung auslöst und danach das Hubelement aufstellt, wobei jedoch die Haltevorrichtung keine Rastelemente für das Verriegeln des Hubelementes mit dem Gehäuse aufweist.

Im bekannten Fall ist ein schaftförmiges, in einer Hülse aufgenommenes Halteglied mit einer Soll-Trennstelle vorgesehen, das, zugleich als Hubelement dienend, kopfseitig mit dem Haubenschamier verbunden ist. Im Kollisionsfall sprengt der Gasgenerator das Halteglied radial in zwei Teile auf, wobei der obere Teile, auf dem das Haubenschamier befestigt ist, aus der Hülse schussartig herausgetrieben wird. Ein aufbiegbares, vorgefaltetes Blechteil begrenzt dabei den Aufstellhub. Da außer über dieses gefaltete Blechteil mangel seines entsprechenden Hubelementes keine starre mechanische führende Verbindung zwischen Haubenschamier und Karosserie besteht, ist die Aufstellbewegung sehr undefiniert. Ferner ist der Aufwand, nach einer Auslösung den betriebsbereiten Zustand herzustellen, sehr hoch, da nicht nur der Gasgenerator, sondern auch das Halteglied und der faltbare Hubbegrenzer ersetzt werden müssen, also es muß praktisch ein komplettes neues Aufstellelement eingebaut werden. Bei einer Variante dieser Ausführungsform wird der Hubbegrenzer durch ein Teleskoprohr gebildet, der auch die Schuss-Hülse ersetzt. Beim Zünden des Gasgenerators wird ebenfalls der obere Teil des Haltegliedes, der mit dem obersten Teleskop-Teil verbunden ist, abgesprengt, wobei das Treibgas das Auseinanderziehen des Teleskoprohres unterstützt. Auch bei dieser Variante ist der Aufwand zur Herstellung des betriebsbereiten Zustandes sehr hoch, da neben dem Gasgenerator auch das zerstörte Halteglied mit erheblichem Montageaufwand ersetzt werden muß.

Von einer direkten Auslösung von durch Formschluß in der Verriegelungslage gehaltenen Rastelementen kann man daher bei diesem bekannten System nicht sprechen.

Weiterbildungen und Ausgestaltungen der Erfindung sind in den Unteransprüchen gekennzeichnet sowie ergeben sich aus der nachfolgenden Figurenbeschreibung.

Anhand von zwei in den Zeichnungen auf der Basis eines Aufstellelementes für die Fronthaube eines Kraftfahrzeuges in verschiedenen Betriebszuständen dargestellten Ausführungsbeispielen wird die Erfindung näher erläutert.

Es zeigen:
- Fig. 1: in einer Längsschnitt-Darstellung ein erstes Ausführungsbeispiel der erfindungsgemäßen pyrotechnisch auslösbaren Haltevorrichtung mit Rastelementen in Form von Rastkugeln, die im direkten Formschluß mit dem Außenmantel eines pyrotechnischen Gasgenerators stehen, im gehaltenen Grundzustand des Hubelementes,
- Fig. 2: die Haltevorrichtung nach Fig. 1 im Zustand unmittelbar nach Zündung des Gasgenerators unter Aufhebung des Formschlusses,
- Fig. 3: die Haltevorrichtung nach Fig. 1 am Beginn der Aufstellung des Hubelementes unmittelbar vor der vollständigen Auslösung der Verrastung,
- Fig. 4: die Haltevorrichtung nach Fig. 1 mit vollständig ausgelöster Haltevorrichtung und ausfahrendem Hubelement,
- Fig. 5: in einer Längsschnitt-Darstellung ein zweites Ausführungsbeispiel der erfindungsgemäßen pyrotechnisch auslösbaren Haltevorrichtung entsprechend Fig. 1, jedoch mit Rastdomen als Rastelementen, im Grundzustand, und
- Fig. 6: die Haltevorrichtung nach Fig. 5 im ausgelösten Zustand.

Die Figuren zeigen in einer Längsschnitt-Darstellung die auslösbare Haltevorrichtung eines Aufstellelementes für eine "aktive Motorhaube" eines Kraftfahrzeuges, bestehend aus einem fahrzeugfesten Gehäuse 1 und einem darin im Außenmantel 1 a gehalterten, linear geführten Hubelement 2. Dieses Aufstellelement ist nur im Ausschnitt im Bereich der Haltevorrichtung und schematisiert dargestellt.

In einer Bohrung im Gehäuseboden 1 b, an der sich ein hülsenartiger Fortsatz 1 c des Gehäuses anschließt, ist ein pyrotechnischer Gasgenerator 3 auswechselbar angebracht, der im dargestellten Beispiel einen starren Außenmantel 3 a aufweist.

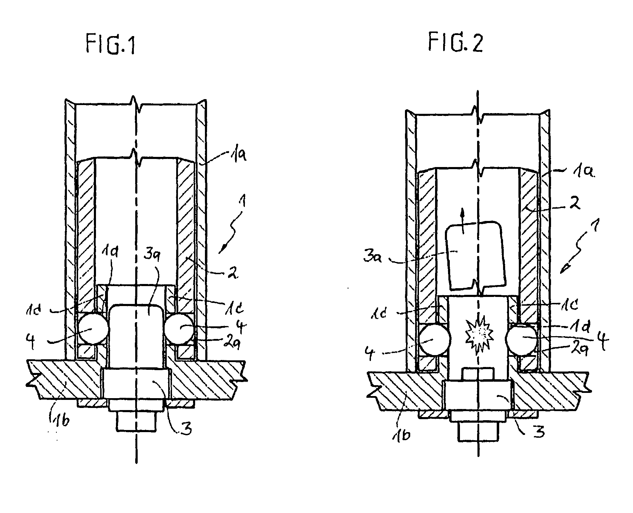

Die dargestellte auslösbare Haltevorrichtung weist eine an sich bekannte Kugelverrastung auf, bestehend aus mindestens zwei gegenüberliegend, jeweils in einer kugelfangartigen Ausnehmung 2 a im Hubelement und einer kugelfangartigen Ausnehmung 1 d im hülsenartigen Gehäuse-Fortsatz 1 c aufgenommenen Rastkugeln 4. Im Grundzustand des Aufstellelementes, der in Fig. 1 gezeigt ist, werden die Rastkugeln 4 durch den direkten Formschluß mit dem Außenmantel 3 a des pyrotechnischen Gasgenerators auf einfache Weise in der verrasteten Position gehalten.

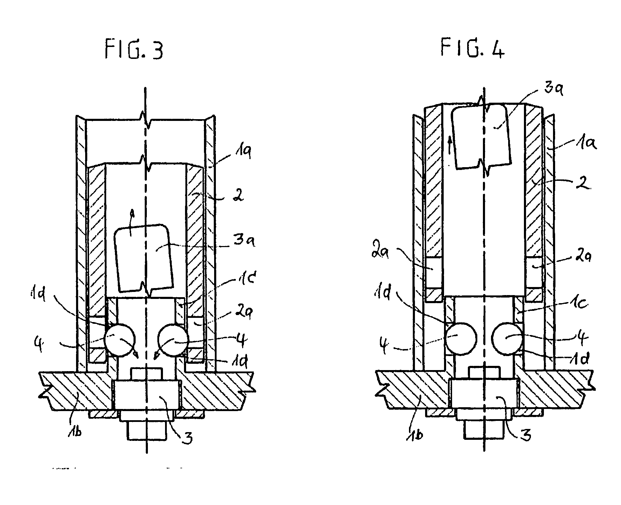

Bei Zündung des Gasgenerators 3 wird dessen Außenmantel 3 a "abgesprengt", wodurch der Formschluß mit den Rastkugeln 4 entfällt. Diesen Zustand zeigt die Fig. 2. Der anstehende Gasdruck treibt das Hubelement in bekannter Weise nach oben, dabei werden, wie die Fig. 3 zeigt, die Rastkugeln 4 durch eine entsprechende geometrische Gestaltung der Aussparungen 2 a im Hubelement und 1 d im hülsenartigen Gehäuse-Fortsatz 1 c nach innen in Richtung Gasgenerator getrieben und geben daher in der Endstellung das Hubelement 2 zum vollständigen Ausfahren frei (Fig. 4).

Der Außenmantel 3 a des pyrotechnischen Gasgenerators 3 kann als zusätzliches Bauteil auf dem "eigentlichen" Gasgenerator als eine Art Hut sitzen, der beim Zünden des Treibsatzes des Gasgenerators nach oben "abgesprengt" wird. Die Anordnung kann allerdings auch so getroffen werden, dass sich der Außenmantel nicht, wie in den Figuren 1 bis 4 dargestellt, abhebt, sondern durch die Gewalt der Explosion in sich zerstört wird. Bei dieser Lösung können in vorteilhafter Weise die unterschiedlichsten Materialien als Werkstoff für den Außenmantel zum Tragen kommen, z.B. ein dünnwandiger harter Kunststoff.

Die Verrastung der Haltevorrichtung kann neben den dargestellten Rastkugeln auch durch andere Rastelemente erfolgen, z.B. durch Rasthebel oder Bolzen entsprechend dem eingangs zitierten Stand der Technik, die sich jeweils am Betätigungsende im direkten Formschluß mit dem Außenmantel 3 a des Gasgenerators befinden.

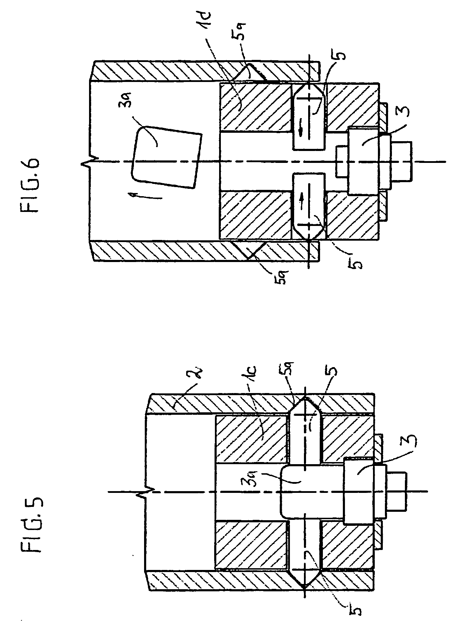

Eine denkbare Variante mit Rastbolzen 5, die im zentrischen Gehäuseteil 1 c axial verschiebbar aufgenommen sind und mit komplementären Rastsitzen 5 a im Hubelement 2,zeigt die Figur 5 im Grundzustand und in Fig. 6 nach dem Absprengen des Außenmantels 3 a des pyrotechnischen Gasgenerators und der Freigabe des Hubelementes.

Durch eine entsprechende Formgebung der Rastsitze 5 a und der Köpfe der Rastbolzen 5 wird erreicht, dass die Rastbolzenköpfe nach der Zündung bei der beginnenden Aufstellbewegung des Hubelementes 2 aus den Rastsitzen radial nach innen weggedrückt werden, wie in Fig. 6 durch die Pfeile veranschaulicht ist.

Andere entsprechende Varianten sind ebenfalls möglich.

In den Figuren 1 - 6 ist die Erfindung anhand eines Aufstellelementes für die Anhebung der Fronthaube eines Kraftfahrzeuges dargestellt.

Die erfindungsgemäße Haltevorrichtung kann in entsprechender konstruktiver Anpassung auch bei Überrollbügelsystemen Anwendung finden. Das Hubelement 2 ist dann als Halteglied für den Überrollkörper ausgebildet.

In den dargestellten Ausführungsbeispielen dient der Gasgenerator gleichzeitig als Energiespeicher zum Aufstellen des Hubelementes. Dadurch ist die Anordnung sehr effektiv und kostengünstig. Prinzipiell kann jedoch auch mindestens eine vorgespannte Schraubenfeder in bekannter Weise als Aufstellantrieb vorgesehen sein.

### Bezugszeichenliste

- 1: fahrzeugfestes Gehäuse
- 1 a: Außenmantel
- 1 b: Gehäuseboden
- 1 c: hülsenartiger Fortsatz
- 1 d: kugelfangartige Ausnehmung
- 2: Hubelement
- 2 a: kugelfangartige Ausnehmung
- 3: pyrotechnischer Gasgenerator
- 3 a: Außenmantel
- 4: Rastkugeln
- 5: Rastbolzen
- 5 a: Rastsitze

## Patentansprüche

1. Pyrotechnisch auslösbare Haltevorrichtung für Schutzvorrichtungen in Kraftfahrzeugen, die ein Aufstellglied aufweisen, das in einem fahrzeugfesten Gehäuse (1) geführt aufgenommen ist, mit beweglichen Rastelementen einer Rastverbindung zum Niederhalten des Aufstellgliedes im Grundzustand und einem pyrotechnischen Gasgenerator zum Lösen der Rastverbindung im Schutzfall, **dadurch gekennzeichnet, dass** der Gasgenerator (3) einen wegsprengbaren Außenmantel (3 a) aufweist, der im direkten haltenden Formschluß mit den beweglichen Rastelementen (4; 5, 5 a) der Rastverbindung steht.

2. Haltevorrichtung nach Anspruch 1, **dadurch gekennzeichnet, dass** die beweglichen Rastelemente durch Rastkugeln (4) gebildet sind.

3. Haltevorrichtung nach Anspruch 1, **dadurch gekennzeichnet, dass** die beweglichen Rastelemente durch Rastbolzen (5) gebildet sind.

4. Haltevorrichtung nach einem der Ansprüche 1 bis 3, **dadurch gekennzeichnet, dass** der Außenmantel (3 a) des pyrotechnischen Gasgenerators (3) hutähnlich auf dem Gasgenerator absprengbar angebracht ist.

5. Haltevorrichtung nach einem der Ansprüche 1 bis 3, **dadurch gekennzeichnet, dass** der Außenmantel des pyrotechnischen Gasgenerators (3) die äußere, zerstörend wegsprengbare Kapselung des Gasgenerators bildet.

6. Haltevorrichtung nach Anspruch 5, **dadurch gekennzeichnet, dass** der Außenmantel aus einem harten Kunststoff besteht.

7. Haltevorrichtung nach einem der Ansprüche 1 bis 6, **dadurch gekennzeichnet, dass** die Haltevorrichtung in Verbindung mit der Schutzvorrichtung so ausgebildet ist, dass nur ein einziger pyrotechnischer Gasgenerator zum Auslösen der Haltevorrichtung und zum Ausfahren des Aufstellgliedes vorgesehen ist.

8. Haltevorrichtung nach einem der Ansprüche 1 bis 7, **dadurch gekennzeichnet, dass** die Haltevorrichtung Bestandteil einer Schutzvorrichtung zum aktiven Aufstellen der Fronthaube des Kraftfahrzeuges mittels eines als Hubelement (2) ausgebildeten Aufstellgliedes ist.

9. Haltevorrichtung nach einem der Ansprüche 1 bis 7, **dadurch gekennzeichnet, dass** die Haltevorrichtung Bestandteil einer Überrollbügel-Schutzvorrichtung ist, mit einem mit dem Überrollbügel zumindest haltend ausgebildeten Aufstellglied.

## Claims

1. Pyrotechnically actuated retaining device for protective devices in motor vehicles which have an erecting component which is received so as to be guided in a housing (1) fixed on the vehicle, with movable latching elements of a latching connection for holding down the erecting component in the basic state and a pyrotechnic gas generator for releasing the latching connection when protection is needed, **characterised in that** the gas generator (3) has an outer shell (3a) which can be blown away and which is in directly retaining positive engagement with the movable latching elements (4; 5, 5a) of the latching connection.

2. Retaining device according to Claim 1, **characterised in that** the movable latching elements are formed by latching balls (4).

3. Retaining device according to Claim 1, **characterised in that** the movable latching elements are formed by latching bolts (5).

4. Retaining device according to any one of Claims 1 to 3, **characterised in that** the outer shell (3a) of the pyrotechnic gas generator (3) is mounted like a hat on the gas generator so that it can be blown off.

5. Retaining device according to any one of Claims 1 to 3, **characterised in that** the outer shell of the pyrotechnic gas generator (3) forms the outer casing of the gas generator which can be destructively blown away.

6. Retaining device according to Claim 5, **characterised in that** the outer shell is made from a hard plastics material.

7. Retaining device according to any one of Claims 1 to 6, **characterised in that** the retaining device is constructed in conjunction with the protective device in such a way that only one single pyrotechnic gas generator is provided in order to actuate the retaining device and to extend the erecting component.

8. Retaining device according to any one of Claims 1 to 7, **characterised in that** the retaining device is a component of a protective device for active erection of the bonnet of the motor vehicle by means of an erecting component constructed as a lifting element (2).

9. Retaining device according to any one of Claims 1 to 7, **characterised in that** the retaining device is a component of a rollover bar protecting device, with an erecting component constructed so that it has at least a retaining function with the rollover bar.

## Revendications

1. Dispositif de retenue à déclenchement pyrotechnique destiné à des dispositifs de protection dans des véhicules automobiles, qui comportent un élément d'installation, qui est contenu dans un boîtier fixé au véhicule (1), avec des éléments d'encliquetage mobiles d'une liaison par encliquetage pour le maintien de l'élément d'installation à l'état initial et un générateur de gaz pyrotechnique pour le déblocage de la liaison d'encliquetage en cas de protection, **caractérisé en ce que** le générateur de gaz (3) comporte une enveloppe extérieure pouvant être mise en oeuvre par détonateur à distance (3a), qui établit un engagement final de retenue avec les éléments d'encliquetage mobiles (4 ; 5, 5a) de la liaison d'encliquetage.

2. Dispositif de retenue selon la revendication 1, **caractérisé en ce que** les éléments d'encliquetage mobiles sont constitués de billes d'encliquetage (4).

3. Dispositif de retenue selon la revendication 1, **caractérisé en ce que** les éléments d'encliquetage mobiles sont constitués de chevilles d'encliquetage (5).

4. Dispositif de retenue selon les revendications 1 à 3, **caractérisé en ce que** l'enveloppe extérieure (3a) du générateur de gaz pyrotechnique (3) est fixée avec possibilité de mise en oeuvre par détonateur sur le générateur de gaz de façon semblable à un chapeau.

5. Dispositif de retenue selon l'une des revendications 1 à 3, **caractérisé en ce que** l'enveloppe extérieure du générateur de gaz pyrotechnique (3) constitue la capsule extérieure pouvant être mise en oeuvre par détonateur, qui se brise, du générateur de gaz.

6. Dispositif de retenue selon la revendication 5, **caractérisé en ce que** l'enveloppe extérieure est constituée d'une matière plastique rigide.

7. Dispositif de retenue selon l'une des revendications 1 à 6, **caractérisé en ce que** le dispositif de retenue en liaison avec le dispositif de protection est configuré de telle sorte que seul un générateur de gaz pyrotechnique unique pour le déblocage du dispositif de retenue et pour la sortie de l'élément d'installation est prévu.

8. Dispositif de retenue selon l'une des revendications 1 à 7, **caractérisé en ce que** le dispositif de retenue est une pièce composante d'un dispositif de protection pour l'installation active du capot du véhicule automobile au moyen d'un élément d'installation qui se déploie en tant qu'élément de course (2).

9. Dispositif de retenue selon l'une des revendications 1 à 7, **caractérisé en ce que** le dispositif de retenue est une pièce composante d'un dispositif de protection avec arceau de sécurité, ayant au moins un élément d'installation configuré de retenue avec l'arceau de sécurité.
